(19) Europäisches Patentamt
European Patent Office
Office européen des brevets

(11) Publication number: 0 089 820 B1

(12) EUROPEAN PATENT SPECIFICATION

(45) Date of publication of patent specification: 12.08.87

(51) Int. Cl.$^4$: C 08 G 65/00

(21) Application number: 83301501.9

(22) Date of filing: 17.03.83

# (54) Perfluoropolyethers, and a process for the preparation of the same.

(30) Priority: 19.03.82 IT 2027082

(43) Date of publication of application:
28.09.83 Bulletin 83/39

(45) Publication of the grant of the patent:
12.08.87 Bulletin 87/33

(84) Designated Contracting States:
BE DE FR GB NL

(56) References cited:
GB-A-1 226 566
GB-A-1 244 189

(73) Proprietor: Montedison S.p.A.
31, Foro Buonaparte
I-20121 Milan (IT)

(72) Inventor: Caporiccio, Gerardo
13, via E. Filiberto
Milano (IT)
Inventor: Viola, Gian Tommaso
25, Via Lenin
Paullo Milano (IT)
Inventor: Corti, Costante
1, via F. Chopin
Milano (IT)

(74) Representative: Whalley, Kevin et al
MARKS & CLERK 57/60 Lincoln's Inn Fields
London WC2A 3LS (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 089 820 B1

## Description

This invention relates to perfluoropolyethers, and to a process for the preparation of the same.

It is known that the polyperoxidic perfluoropolyethers of formula:

$$RO—[(C_2F_4O)_p—(CF_2O)_q—(O)_s]—R' \quad (I)$$

wherein R and R' are the same as or different from each other and may be $—CF_3$, $—COF$, or $—CF_2COF$; *p, q* and *s* are from 300 to 20,000; and the ratio p/q is from 0.2 to 25, may be obtained by photo-oxidation of perfluoroethylene. This polyperoxide may be reduced to a polyether devoid of peroxide oxygen atoms by thermal or heat treatment at a temperature from 150° to 250°C, or by subjecting the pure polyperoxide or the polyperoxide dissolved in a solvent to irradiation with mercury-vapour lamps.

In this second phase, when the precursor (I) has a high content of peroxidic oxygen atoms, there takes place a molecular degradation and a loss in weight, which are more notable the greater the content of peroxidic oxygen atoms. Moreover, the greater the degradation of the molecular weight and the loss in weight, the greater the content in the chain of oxyperfluoromethylenic units that are capable of progressive fissions (chain fissions), known as β-fission processes.

For example, in the case of a peroxidic precursor corresponding to the formula (I) and obtained from the photo-oxidation of tetrafluoroethylene, and having a peroxidic oxygen content of 1.8 g/100 g of product, that is a content of —O—O— units which, referred to the sum of p + q units, corresponds to a molar ratio s/p + q of 0.1 and a molecular weight of 570,000 with a p/q ratio equal to 1.3, heat treatment in a glass reactor at a temperature from 130° to 190°C in 8 hours yields an end product that is no longer peroxidic, having a molecular weight of 33,000 and p/q ratio equal to 0.7, while the loss in weight amounts to 25%. It is calculated that during the reduction, as an average, from a chain of starting polyperoxide there are obtained twelve new chains with lengths corresponding to about 500 p + q units.

The content of peroxidic oxygen indicated hereinabove and in the following corresponds to one oxygen atom per each peroxidic bridge.

For the same starting product, placed in a cylindrical glass reactor kept at −20°C and fitted with a series of concentric quartz sheathes, at the centre of which had been placed a medium pressure mercury-vapour lamp of the Hanau TQ150 type, there was recorded a loss in weight equal to 18%, while the product thus prepared showed a molecular weight of 45,000 corresponding to a chain formed of 550 (p + q) units.

Repeating the thermal reduction test on a peroxidic precursor of formula (I), characterized by a peroxidic oxygen content equal to 4.1 g/100 g of oil, a p/q ratio of 2.1, a viscosity of $3 \times 10^5$c.St/20°C and a molecular weight of $1.1 \times 10^6$, by heating at a temperature from 150°C to 250°C for 8 hours, there is obtained a non-peroxidic product, with a loss in weight of 58%, having a molecular weight of 7700 corresponding to about 100 (p + q) units; there have thus been obtained about 150 chains per starting peroxidic chain.

We are aware of GB—A—1,244,189 which discloses perfluorinated linear polyethers or copolyethers having units $(C_3F_6O)_m$, $(CF_2)_n$, $(C_2F_4O)_l$ randomly distributed along the chain of the perfluoropolyether and the sum (m + n + l) ranges from 1 to 50.

We are also aware of GB—A—1,226,566 which discloses perfluoropolyethers having the representative formula:

$$X—O—(—C_3F_6—O—)_P—(CF_2—O)_Q—(—C_2F_4—O—)_R—Y$$

in which $—C_3F_6$ and $—C_2F_4—$ represent perfluoroalkylene groups having the structure of $—CF_2—CF(CF_3)—$ and $—CF_2—CF_2—$ respectively.

The present invention in one aspect provides a perfluoropolyether comprising, in addition to recurring oxyperfluoroalkylene units of the type $—CF_2O—$ and $—CF_2CF_2O—$, other oxyfluoroalkylene units having at least three carbon atoms in linear arrangement and deriving from a mono- or di-olefin at least partially fluorinated and selected from those not susceptible or only scarcely susceptible to homopolymerize in the presence of peroxide and/or U.V. radiation, the oxyfluoroalkylene units being arranged randomly along the polymeric chain.

A preferred perfluoropolyether according to the invention is characterized by the presence of oxyperfluoroalkylene units having at least three carbon atoms in linear arrangement and a total number of carbon atoms of at least four.

In the perfluoropolyethers according to the invention, the sum of the $—CF_2O—$ and $—CF_2CF_2O—$ units is preferably from 300 to 20,000, and also the numerical ratio between the fluoroalkylenic units containing three or more carbon atoms and the sum of the $—CF_2O—$ and $—CF_2CF_2O—$ units is preferably from 0.05 to 0.25.

Perfluoropolyethers according to the invention may be obtained by using $C_3F_6$ as fluorinated olefin; by using $CF_2{=}CFBr$ as fluorinated olefin; or by using $CF_2CF—CF{=}CF_2$ as fluorinated di-olefin.

The invention in another aspect provides a process for the preparation of a perfluoropolyether according to the first aspect of the invention, reacting a perioxidic perfluoropolyether, obtained by the action of oxygen on $C_2F_4$ in the presence of U.V. radiation, with either a mono- or di-olefin, at least partially

fluorinated, and selected from those not susceptible or only scarcely susceptible to homopolymerize in the presence of peroxide and/or U.V. radiation, the reaction between the peroxidic perfluoropolyether and the said olefin being conducted in the presence of U.V. radiation.

In the process of the invention the acid terminal groups of the perfluoropolyether are preferably eliminated through treatment with gaseous fluorine at a high temperature.

Also, the peroxidic perfluoropolyether is preferably obtained by the action of oxygen on $C_2F_4$ in the presence of U.V. radiation generated by a mercury-vapour lamp and filtered by an aqueous solution of $CuSO_4$.

The present invention thus provides a process for the obtention of perfluoroethers having in the polymeric chain at least three different alkylene units linked to each other through etheric bridges and arranged by a "random" distribution along the polymeric chain; two of these units, consisting of $-CF_2$ and $-C_2F_4$, are those resulting from the photo-oxidation process of $C_2F_4$ and pre-exist in the structure of the peroxidic precursor, while the third alkylene unit is introduced into the chain according to the present process and has three or more carbon atoms.

This additional unit is inserted in place of the peroxidic bridges and alternates with the other pre-existing oxyperfluoroalkylene units thereby forming a polyetheric structure. The starting product of the present invention is preferably a polyperoxidic perfluoropolyether with a structure corresponding to the above formula (I) wherein the sum $p + q$ is from 300 to 20,000, more preferably from 300 to 15,000, and the ratio $s/p + q$ is from 0.05 to 0.5, more preferably from 0.05 to 0.25.

Such a starting product may be obtained according to a photo-oxidation process carried out in a cylindrical reactor provided with a series of concentric sheaths of transparent quartz, such that in the central sheath there is placed a medium-pressure mercury-vapour lamp of the Hanau TQ 150 type (150 W), while in the interspace with the adjacent sheath there circulates an aqueous solution containing up to 2% of $CuSO_4$, and in the outer interspace there circulates a flow of nitrogen. Into the reactor are condensed, and kept at a temperature from −60°C to −35°C, 1000 grams of difluorodichloromethane.

After ignition of the mercury-vapour lamp inside the sheath system described above, there is bubbled through a mixture of oxygen and tetrafluoroethylene in a $O_2/C_2F_4$ ratio from 2 to 1, with a flow rate of up to 80 lt/hr. From the radiations coming from the mercury-vapour lamp, filtered by the $CuSO_4$ solution, there are gradually eliminated, as the concentration of the $CuSO_4$ increases up to 2%, the radiations with a wave length below 280 nm. In this way the radiations thus selected promote the formation of a product with a greater peroxide content and a greater molecular weight.

After five hours of irradiation under above indicated conditions, there will be obtained a solution containing up to 25% by weight of a polyetherperoxide oil that is characterized by iodometric titration, N.M.R. analysis and viscosity.

The polyperoxidic perfluoropolyether precursors are made to react at temperatures from −50° to +50°C, in the presence or absence of fluorinated or chlorofluorinated solvents liquid at these temperatures, in the absence of either air or molecular oxygen, with suitable olefins introduced into the mixture in the gaseous form or in the liquid state.

The mixture of reactants is then subjected to irradiation with ultraviolet rays in the range from 240 to 360 nm, emitted by a Hanau TQ 150 type lamp with the mercury vapour at medium pressure.

Such a process, conventionally referred to as a re-irradiation process, leads to the elimination of the —O—O— groups, according to a reaction scheme in which the scission of the peroxidic bond is followed by an insertion reaction of the olefin at a competitive rate with respect to the degradative β-scission reactions.

The preferred solvents for the process are selected from perfluoroalkanes and perfluoropolyethers, for example perfluoroethane, perfluorocyclobutane, perfluorodimethylcyclobutane and perfluoropropylpyrane.

The preferred fluoro-olefins for the reaction with the polyperoxidic precursor are those having the characteristic of not homopolymerizing according to a radical mechanism in the presence of peroxide or of U.V. radiation (group 1) or of homopolymerizing with difficulty (group 2).

Examples of preferred fluoro-olefins of the group 1 are: hexafluoropropene, 1-hydropentafluoropropene-1,2-hydropentafluoropropene-1, perfluoromethylvinylether, perfluoropropylvinylether, and 4-trifluoromethyl-3,6-dioxyperfluoroheptene-1; examples of preferred fluoroolefins of group 2 are: cycloperfluorobutene, perfluorobutadiene, and trifluorobromoethylene.

Such olefins react, under the described conditions, with radicals of the perfluoroalkoxidic type, generated by the fission of the peroxidic —O—O— bond, or they react with radicals of the perfluoroalkylenic type coming from the immediate metathesis of perfluoroalkoxidic radicals through the β-scission mechanism.

In the overall reaction, the perfluoro-olefin inserts itself into the polymeric chain at the site of the peroxidic bond through the described starting reactions and the end reactions for the coupling between the radicals, having a high degree of competitiveness with respect to the fission reaction of the chain.

For example, a peroxidic type I precursor, coming from the photo-oxidation of $C_2F_4$, as previously herein described, with a molecular weight (MV) of $1.10.10^6$ and an active oxygen content of 4 g/100 g of product, and from which had been removed any trace of dissolved molecular oxygen, was subjected to a re-irradiation treatment with a mercury-vapour lamp of the Hanau TQ 150 type, at low temperature, in the presence of hexafluoropropene, thereby obtaining a new polyether where, at the site of the pre-existing

peroxidic —O—O— group, through the sequence of the described reactions, there has taken place insertion with the formation of structures, prevailingly of the type:

$$—O\ C_3F_6—CF_2O—$$
$$—O\ C_3F_6—C_2F_4\ O—$$

wherein $C_3F_6$ represents the unit $—CF_2CF(CF_3)—$ and $C_2F_4$ represents the unit $—CF_2CF_2$.

According to a preferred embodiment of the process of this invention, the peroxidic perfluoropolyetheric precursor is dissolved in an excess of fluoro-olefin so as to form a 30—50% solution; the mixture thus obtained is then cooled down to a temperature from −40° to 0°C, after which it is then subjected, through a quartz sheath or window, to irradiation with a medium-pressure mercury-vapour lamp.

The reaction is then continued up to the total disappearance of the peroxidic bridges, while the resulting polyether is recovered through evaporation and distillation of the fluoro-olefin. It will be observed that the reaction did not cause any loss in weight of the starting peroxide.

In relation to the reacting product, by means of chemical and structural (NMR) analyses, there is then ascertained the disappearance of the peroxidic oxygen and the appearance of new perfluoroalkylenic units which confer to the product itself a structure that is new with respect to that of the starting perfluoropolyether-polyperoxidic precursor. Moreover, there is also determined a viscosity of 30,000 c.St (at 20°C) and a M.W., on the basis of a gel permeation chromatography test, of 270,000. Since from NMR analysis the p/q ratio is equal to 0.8, it is determined that from each starting peroxidic chain, on average, there have been formed 4 chains.

The products obtained according to the re-irradiation process consist of perfluoropolyetheric chains having chain terminals of the neutral type (such as $—CF_3$) or of the acid type (such as $—CF_2—COF$), coming from the peroxidic precursors of formula I.

The acid terminals, of the carbonylfluoride type, may be transformed into neutral terminals according to one of the following two processes:

(a) by fluorination at high temperature (150°—240°C);

(b) by alkaline hydrolysis with KOH at 5% in the presence of ethylene glycol at 180°C.

The new neutral groups are of the type $—C_2F_5$, $—CF_3$ in the case of the first process, or of the type $—CF_2H$ in the case of the second.

The fluorination process (a) is the preferred one for obtaining neutral perfluoropolyethers, in the case in which the re-irradiation process of the peroxidic precursor had been made with fluoro-olefins belonging to group 1.

The acid terminals may also be transformed into different terminal groups such as into esteric, amidic, or methylolic groups, by the methods described in, for example, U.S. Patent Nos. 3 847 978, 3 864 318 and 3 876 617.

The advantage of the present process of re-irradiation of the peroxidic precursor with fluoro-olefins are:

(1) the obtention of non-periodic perfluoropolyethers containing $—C_2F_4O—$ and $—CF_2O—$ units of a high molecular weight, greater than that obtainable with the processes known previously (thermal reduction or photochemical reduction in the absence of olefin);
(2) minimization or elimination of the molecular degrading of the starting chain giving gaseous products;
(3) obtention of end products, after the elimination of the acid terminals through treatment with fluorine, which are found to be more stable to heat than it is possible to obtain by means of the known processes.

The perfluoropolyethers obtained according to the present invention and having neutral terminals find useful application as hydraulic fluids of high viscosity, such as heat-exchange liquids with a very high chemical and thermal stability. Still another application of perfluoropolyethers with a high molecular weight obtainable according to this invention is that of additives for fluorinated elastomers with the aim of improving the processability (workability) of the latter.

In the case that the re-irradiation process of the peroxidic precursor is achieved with a fluoro-olefin of group 2, having two double bonds, as in the case of perfluorobutadiene, or a reactive group such as the bromine atom of bromotrifluoroethylene, the end products have, after the re-irradiation, reactive sites in the perfluoropolyetheric chain (such as the double bond or the bromine atom) which may be suitably dosed in their concentration, starting from the peroxidic oxygen content in the starting peroxide, and may be utilized as reactive sites for realizing cross-netting reactions amongst the linear chains or grafting reactions of other olefins, or fixing on other polymeric substrates or on other materials.

The invention will be further described with reference to the following illustrative Examples.

Example 1

Into a cylindrical 900 cc glass reactor of 100 mm diameter, provided with a three-sheath system of coaxial quartz-sheaths respectively of 22, 40 and 60 mm diameter, and a drawing pipe for the introduction of the gases, and fitted with a condenser thermo-stabilized at −80°C, there were introduced 1100 grams of

dichlorodifluoromethane. Inside the 25 mm diameter sheath there was placed a medium-pressurized mercury-vapour lamp of the Hanau TQ 150 type of 150 W, while in the interspace between the 25 mm sheath and the 40 mm sheath there was made to circulate a solution containing 0.5% of $CuSO_4$ in order to cool the burner and eliminate the radiation of wave length below 260 nm. Within the interspace between the 40 mm sheath and the 60 mm sheath, there was made to circulate nitrogen.

Through the drawing pipe there were fed into the reactor, over a period of time of 5 hours, 120 litres of $C_2F_4$ and 200 litres of oxygen, maintaining the temperature of the reaction mixture at −35°C. At the end of 5 hours, the mercury-vapour lamp was switched off and the solvent was allowed to evaporate from the reactor, facilitating its removal by means of a weak nitrogen current; thereby there were obtained 210 grams of a polymeric liquid that had remained as a residue.

By iodometric analysis there was ascertained a peroxidic oxygen content of 1.8 grams/100 g of polymeric oil. NMR analysis showed that the polymeric product consisted of polyetheric chains containing units of the $CF_2O$ and of the $-CF_2CF_2O-$ type, statistically spaced with $-CF_2OO-$ and $-CF_2CF_2-OO-$ units in such quantities that the total ratio $C_2/C_1$ equals 1.3.

Because of the high molecular weight the terminals were not detectable by the NMR analysis, as a result of which it was not possible to evaluate in this way the molecular weight. The viscosity of the product determined by means of a Brookfield viscosimeter was found to be equal to $10^5$ c.St., a value which, on the basis of a preceding calibration, permitted the molecular weight to be calculated to be 570,000, corresponding to 6050 units in the chain.

100 g of the product thus prepared and isolated in the pure state were placed into a reactor like that described previously and, while maintaining a moderate nitrogen current, in the reactor maintained at at −40°C, there were condensed 400 g of perfluoropropene. After all the polymeric oil was dissolved in the olefin, into the system of sheaths, refrigerated with distilled water, there was introduced a medium-pressurized 150 W mercury-vapour lamp. After 8 hours of irradiation, the lamp was turned off and the unreacted perfluoropropene was evaporated. There were thus obtained 105 g of a polymeric oil that did not exhibit, upon iodometric analysis, any content of peroxidic oxygen.

The viscosity, evaluated by means of the capillary viscosimeter, was 17,000 c.St, corresponding to a molecular weight of 190,000. NMR analysis showed, in addition to the normal structure of a non-peroxidic polyether, the appearance of new bands which were attributed to new units containing 4 or more carbon atoms.

The product was then quantitatively transferred into a three-necked flask fitted with a stirrer, a condenser and a drawing pipe through which was made to pass a mixture of fluorine and nitrogen in a fluorine/nitrogen ratio of 1:1 and at a flow rate of 10 lt/hr. The temperature was gradually brought from 150°C up to 240°C in 2 hours. The fluorination was then continued for a total of 10 hours, thereby obtaining 85 g of a neutral product with a viscosity of 16,000 c.St, corresponding to a molecular weight of 180,000.

On this product was then carried out the evaluation of the viscosity index through the viscosity values at 37.8°C and at 98.9°C, respectively corresponding to 8000 and 1200 c.St.

The stability to thermal oxidation was tested for 24 hours at 250°C, in the presence of a Ti-Al-V alloy and an air current flowing at a rate of 1 lt/hr, but no variation either with respect to the loss of weight or with regard to the viscosity and acidity characteristics of the product were detected.

Comparative Example 1A

50 Grams of the starting peroxidic product in the pure state were placed inside a quartz phial and were then irradiated at room temperature using a medium-pressurized 150 W mercury-vapour lamp placed outside the phial. After 15 hours of irradiation, there were gathered 41.5 g of a polymeric oil having a peroxidic substance content that was not detectable, while the viscosity was 1150 c.St, corresponding to a molecular weight of 36,000, equal to 450 units per chain.

The fluorination of the product thus obtained according to the procedure previously described yielded 38 g of a neutralized polymeric oil having a viscosity of 1000 c.St, corresponding to a molecular weight of 34,000, equal to 390 units per chain ($p/q = 0.78$).

Comparative Example 1B

50 Grams of the starting peroxidic product were transferred into a flask provided with a stirrer, a condenser and a drawing pipe through which was made to circulate a slight flow of nitrogen.

The oil was heated up to 240°C according to the following heating cycle: 140°C (for 2 hours), 160°C (2 hours), 180°C (2 hours), 200°C (2 hours) and 240°C (for 8 hours).

At the end of the treatment there were obtained 35.6 grams of non-peroxidic oil having a viscosity of 950 c.St, corresponding to a molecular weight of 32,000, equal to 400 units/chain.

The fluorination of the product thus prepared according to the procedure previously described yielded 30.1 g of a polyether with a viscosity of 940 c.St, corresponding to a molecular weight of 32,000, equal to 400 units per chain.

Example 2

Using the same equipment as in Example 1 and operating in the same way, while allowing a 1% solution of $CuSO_4$ to circulate in the refrigerating sheath, into the reactor there were fed in, during a period

of 5 hours, 140 lt of $C_2F_4$ and 200 lt of oxygen, the reactor temperature being maintained at −45°C. At the end of the reaction, after evaporation of the solvent, there were obtained 221 g of a polymeric liquid having active oxygen content equal to 3.1 g per 100 g of oil.

The viscosity, determined by means of a Brookfield viscosimeter, was $1.3 \times 10^5$ c.St, corresponding to a molecular weight of 800,000 (8420 units), while the $C_2/C_1$ ratio, determined through NMR analysis, was 1.3.

Operating according to the procedure described in Example 1, 100 g of the product was transferred into a second reactor and on this product were condensed 400 g of perfluoropropylene.

The mixture was then irradiated for 8 hours at a temperature of −30°C. Once the photochemical reduction reaction was achieved, there were obtained 105 grams of a polymeric product the peroxidic content of which was zero. The viscosity of the product, determined by a capillary viscosimeter, was 26,000 c.St, which corresponded to a molecular weight of 250,000 (equal to 2810 units/chain). The $C_2/C_1$ ratio, determined by NMR analysis, was 0.8.

Comparative Example

100 grams of the same peroxidic product were reduced thermally, operating in the same way as described in Example 1B.

At the end of the reaction there were obtained 58 g of a non-peroxidic oil having a viscosity of 550 c.St, corresponding to a molecular weight of 18,900, equal to 220 units per chain ($p/q = 0.6$).

Example 3

Using the previously described equipment, for the cooling of the mercury lamp there was used a 2% solution of $CuSO_4$. Using this concentration it proved possible to eliminate the U.V. radiation with a wave length below 280 nm.

During 5 hours, and maintaining the reaction mixture temperature at −40°C, into the reactor were fed 80 litres of $C_2F_4$ and 160 litres of oxygen. At the end of the reaction there were obtained 120 grams of a very viscous polymeric product which upon iodometric analysis showed a peroxidic oxygen content of 4.1 g/100 g of product and a viscosity of $3 \times 10^5$ c.St, corresponding to a molecular weight of $1.1 \times 10^6$. NMR analysis gave a $C_2/C_1$ ratio = 2.1.

60 Grams of the product thus obtained were dissolved, according to the same procedure as described in Example 1, in 400 g of $C_3F_6$ and irradiated, using the whole spectrum of the water-cooled, medium-pressurized mercury-vapour lamp.

After 8 hours of irradiation, and after evaporation of perfluoropropene, there were obtained 67 g of a non-peroxidic polymeric product having a viscosity of 30,000 c.St, and a $C_2/C_1$ ratio, determined by means of NMR spectrometry, equal to 0.8. This corresponded to a molecular weight of 270,000 and a number of units per chain equal to 3050.

The product quantitatively transferred into a three-necked flask was fluorinated according to the procedure described in Example 1. Thereby there were obtained 58 g of a neutral product having a viscosity of 28,000 c.St, corresponding to a molecular weight of 260,000.

Comparative Example

The remaining 60 grams of peroxidic product of the preceding preparation were subjected to thermal reduction according to the procedure described in Example 1.

There were obtained 25 grams of a product with a low viscosity of 90 c.St and with a $C_2/C_1$ ratio = 0.3, corresponding to a molecular weight of 7700 and a number of units per chain equal to 100.

Example 4

160 Grams of a polyperoxidic polyether having a peroxidic oxygen content equal to 0.8 g of active oxygen/100 g of product, and having a viscosity of 1100 c.St, corresponding to a molecular weight of 3500, dissolved in 400 grams of perfluorocyclopyrane, were irradiated in a sheath-reactor similar to that described in Example 1, over 4 hours.

During the photochemical reduction there was fed through the drawing pipe of the reactor 2.5 lt of perfluorobutadiene. After evaporation under vacuum of the solvent, there were obtained 162 g of a product the peroxidic product content of which was zero. The viscosity was 1250 c.St.

A solution of $CF_2Cl—CFCl_2$ of the oil thus prepared was additioned with bromine to establish the existence in the molecule of double bonds. Moreover, the infrared spectrum at 1780 $cm^{-1}$ showed the typical frequency of the double bond.

50 Grams of the above prepared perfluoropolyether product, dissolved in $CF_2Cl—CFCl_2$, were oxidized by treatment at 40°C for 5 hours with permanganate diluted in acetone. After elimination of the solvent and washing with acetone, there was added to the product a methanolic solution containing 3.5 g of hexamethylenediamine which was maintained for 2 hours at 50°C. In this way there was caused the formation of a gel insoluble in $CF_2Cl—CFCl_2$. Infrared analysis showed the presence of a carbonyl group at 6.8 microns, characteristic of amidic bonds. From this it can be inferred that the hexamethylenediamine had cross-linked the perfluoropolyether.

Example 5

Using the same equipment and procedure previously described, 100 g of a polyperoxidic polyether, with a peroxidic product content of 0.8 g of active oxygen per 100 g of product and a viscosity of 1100 c.St, were dissolved in 400 g of trifluorobromoethylene, maintaining the mixture of the reactants at −45°C.

The solution was then irradiated with a Hanau TQ 150 type mercury-vapour lamp, for a period of 4 hours. There were obtained, after evaporation of the solvent, 95 grams of a non-peroxidic oil having a viscosity of 550 c.St (m.w. equal to 23,000).

Analysis showed a Br content equal to 1.8% by weight. On the basis of the viscosimetric molecular weight of 23,000, it can be calculated that each chain contained on average 5 bromine atoms.

## Claims

1. A perfluoropolyether characterized by comprising, in addition to recurring oxyperfluoroalkylene units of the type —$CF_2O$— and —$CF_2CF_2O$—, other oxyfluoroalkylene units having at least three carbon atoms in linear arrangement and deriving from a mono- or di-olefin at least partially fluorinated and selected from those not susceptible or only scarcely susceptible to homopolymerize in the presence of peroxide and/or U.V. radiation, the oxyfluoroalkylene units being arranged randomly along the polymeric chain.

2. A perfluoropolyether as claimed in claim 1, characterized by the presence of oxyperfluoroalkylene units having at least three carbon atoms in linear arrangement and a total number of carbon atoms of at least four.

3. A perfluoropolyether as claimed in claim 1 or 2, characterized in that the sum of the —$CF_2O$— and and —$CF_2CF_2O$— units is from 300 to 20,000.

4. A perfluoropolyether as claimed in any of claims 1 to 3, characterized in that the numerical ratio between the fluoroalkylenic units containing three or more carbon atoms and the sum of the —$CF_2O$— and —$CF_2CF_2O$— units is from 0.05 to 0.25.

5. A perfluoropolyether as claimed in claim 2, characterized by being obtained by using $C_3F_6$ as fluorinated olefin.

6. A perfluoropolyether as claimed in claim 1, characterized by being obtained by using $CF_2=CFBr$ as fluorinated olefin.

7. A perfluoropolyether as claimed in claim 2, characterized by being obtained by using $CF_2=CF—CF=CF_2$ as fluorinated di-olefin.

8. A process for the preparation of a perfluoropolyether according to claim 1, characterized by comprising reacting a peroxidic perfluoropolyether, obtained by the action of oxygen on $C_2F_4$ in the presence of U.V. radiation, with either a mono- or di-olefin, at least partially fluorinated, and selected from those not susceptible or only scarcely susceptible to homopolymerize in the presence of peroxide and/or U.V. radiation, the reaction between the peroxidic perfluoropolyether and the said olefin being conducted in the presence of U.V. radiation.

9. A process as claimed in claim 8, characterized in that the acid terminal groups of the perfluoropolyether are eliminated through treatment with gaseous fluorine at a high temperature.

10. A process as claimed in claim 8 or 9, characterized in that the periodic perfluoropolyether is obtained by the action of oxygen on $C_2F_4$ in the presence of U.V. radiation generated by a mercury-vapour lamp and filtered by an aqueous solution of $CuSO_4$.

## Patentansprüche

1. Ein Perfluorpolyether, dadurch gekennzeichnet, daß er zusätzlich zu wiederkehrenden Oxyperfluoralkylen-Einheiten des Typs —$CF_2O$— und —$CF_2CF_2O$— andere Oxyfluoralkylen-Einheiten umfaßt, die mindestens 3 Kohlenstoffatome in linearer Anordnung aufweisen und sich von einem Mono- oder Diolefin ableiten, das zumindest teilweise fluoriert und unter jenen ausgewählt ist, welche in Gegenwart eines Peroxids und/oder UV-Strahlung nicht oder nur geringfügig zur Homopolymerisation neigen, wobei die Oxyfluoralkylen-Einheiten willkürlich entlang der Polymerkette angeordnet sind.

2. Ein Perfluorpolyether nach Anspruch 1, gekennzeichnet durch die Anwesenheit von Oxyperfluoralkylen-Einheiten mit mindestens 3 Kohlenstoffatomen in linearer Anordnung und einer Gesamtzahl von Kohlenstoffatomen von mindestens 4.

3. Ein Perfluoropolyether nach Anspruch 1 oder 2, dadurch gekennzeichnet, daß die Summe der —$CF_2O$— und —$CF_2CF_2O$-Einheiten 300 bis 20 000 beträgt.

4. Ein Perfluoropolyether nach irgendeinem der Ansprüche 1 bis 3, dadurch gekennzeichnet, daß das numerische Verhältnis zwischen den Fluoralkylen-Einheiten, die 3 oder mehr Kohlenstoffatome enthalten, und der Summe der —$CF_2O$— und —$CF_2CF_2O$-Einheiten 0,05 bis 0,25 beträgt.

5. Ein Perfluoropolyether nach Anspruch 2, dadurch gekennzeichnet, daß er unter Verwendung von $C_3F_6$ als fluoriertem Olefin erhalten wird.

6. Ein Perfluoropolyether nach Anspruch 1, dadurch gekennzeichnet, daß er unter Verwendung von $CF_2=CFBr$ als fluoriertem Olefin erhalten wird.

7. Ein Perfluorpolyether nach Anspruch 2, dadurch gekennzeichnet, daß er unter Verwendung von $CF_2{=}CF{-}CF{=}CF_2$ als fluoriertem Diolefin erhalten wird.

8. Ein Verfahren zur Herstellung eines Perfluorpolyethers nach Anspruch 1, dadurch gekennzeichnet, daß man einen peroxidischen Perfluorpolyether, der durch Einwirkung von Sauerstoff auf $C_2F_4$ in Gegenwart von UV-Strahlung erhalten wurde, mit entweder einem Mono- oder Diolefin umsetzt, das zumindest teilweise fluoriert und unter jenen ausgewählt ist, die in Gegenwart eines Peroxids und/oder von UV-Strahlung nicht oder nur geringfügig zur Homopolymerisation neigen, wobei die Reaktion zwischen dem peroxidischen Perfluorpolyether und dem Olefin in Gegenwart von UV-Strahlung durchgeführt wird.

9. Ein Verfahren nach Anspruch 8, dadurch gekennzeichnet, daß die sauren Endgruppen des Perfluorpolyethers durch Behandeln mit gasförmigem Fluor bei hoher Temperatur abgetrennt werden.

10. Ein Verfahren nach Anspruch 8 oder 9, dadurch gekennzeichnet, daß der peroxidische Perfluorpolyether durch Einwirkung von Sauerstoff auf $C_2F_4$ in Gegenwart von UV-Strahlung, die von einer Quecksilberdampflampe erzeugt und durch eine wässrige Lösung von $CuSo_4$ filtriert wird, erhalten wird.

**Revendications**

1. Un perfluoropolyéther caractérisé en ce qu'il comprend en plus d'unités récurrentes oxyperfluoroalkylénes du type $—CF_2O—$ et $—CF_2CF_2O—$ d'autres unités oxyfluoroalkylènes ayant au moins trois atomes de carbone disposés linéairement et dérivant d'une mono- ou dioléfine au moins partiellement fluorée et choisi parmi celles qui ne sont pas ou ne sont que peu susceptibles d'une homopolymérisisation en présence de peroxyde et/ou de radiations UV, les unités oxyfluoroalkylènes étant disposées statistiquement le long de la chaine polymère.

2. Un perfluoropolyéther tel que revendiqué à la revendication 1, caractérisé par la présence d'unités oxyperfluoroalkylène ayant au moins trois atomes de carbone disposés linéairement et un nombre total d'atomes de carbone égal à moins quatre.

3. Un perfluoropolyéther tel que revendiqué à la revendication 1 ou 2, caractérisé en ce que la somme des unités $—CF_2O—$ et $—CF_2CF_2O—$ est de 300 à 20 000.

4. Un perfluoropolyéther tel que revendiqué dans l'une quelconque des revendications 1 à 3, caractérisé en ce que le rapport numérique entre les unités fluoroalkyléniques contenant trois atomes de carbone ou plus et la somme des unités $—CF_2O—$ et $—CF_2CF_2O—$ est de 0,05 à 0,25.

5. Un perfluoropolyéther tel que revendique à la revendication 2, caractérisé en ce qu'il est obtenu en utilisant $C_3F_6$ comme oléfine fluorée.

6. Un perfluoropolyéther tel que revendiqué à la revendication 1, caractérisé en ce qu'il est obtenu en utilisant $CF_2{=}CFBr$ comme oléfine fluorée.

7. Un perfluoropolyéther tel que revendiqué à la revendication 2, caractérisé en cu qu'il est obtenu en utilisant $CF_2{=}CF{-}CF{=}CF_2$ comme dioléfine fluorée.

8. Un procédé de préparation d'un perfluoropolyéther selon la revendication 1, caractérisé en ce qu'il comprend la réaction d'un perfluoropolyéther péroxydique obtenu par action de l'oxygène sur $C_2F_4$ en présence de radiations UV, avec soit une mono- soit une dioléfine, au moins partiellement fluorée, et choisie parmi celles qui ne sont pas ou ne sont que peu susceptibles d'une homopolymérisation en présence de péroxyde et/ou de radiations UV, la réaction entre le perfluoropolyéther et ladite oléfine étant menée en présence de radiations UV.

9. Un procédé tel que revendiqué à la revendication 8, caractérisé en ce que les groupes therminaux acides du perfluoropolyéther sont éliminés par traitement avec du fluor gazeux à haute température.

10. Un procédé tel que revendiqué à la revendication 8 ou 9, caractérisé en ce que le perfluoropolyéther péroydique est obtenu par action de l'oxygène sur $C_2F_4$ en présence de radiations UV engendrées par une lampe à vapeur de mercure et filtrées par une solution aqueuse de $CuSO_4$.